# FASCICULE DE BREVET EUROPEEN

(11) **EP 1 929 356 B1**
(45) Date de publication et mention de la délivrance du brevet: **22.04.2009**
(21) Numéro de dépôt: 06793880.3
(22) Date de dépôt: 28.09.2006
(51) Int. Cl.: G02B 27/01, G02B 27/14

(54) **DISPOSITIF OPTIQUE DE SUPERPOSITION D'IMAGES ELECTRONIQUES DEVANT UN OBJECTIF**
OPTISCHE EINRICHTUNG ZUM ÜBERLAGERN VON ELEKTRONISCHEN BILDERN VOR EINER LINSE
OPTICAL DEVICE FOR SUPERIMPOSING ELECTRONIC IMAGES IN FRONT OF A LENS

(30) Priorité: 29.09.2005 FR 0509951
(43) Date de publication de la demande: 11.06.2008
(73) Titulaire: Thales, 92200 Neuilly sur Seine (FR)
(72) Inventeur: FRANCOIS, Jean-Michel, F-33140 Cadaujac (FR); BOURGAIN, Jean-Louis, F-33400 Talence (FR)
(74) Mandataire: Bréda, Jean-Marc
(86) Numéro de dépôt international: PCT/EP2006/066827
(87) Numéro de publication internationale: WO 2007/036550

(56) Documents cités:
- EP-A- 0 380 035
- US-A- 4 818 065

## Description

Le domaine de l'invention est celui des dispositifs optiques permettant la superposition d'une image électronique à une image provenant du paysage extérieur.

Pour un certain nombre d'applications, il est utile de mélanger à une image du paysage extérieur une image électronique. On citera les viseurs Tête Haute utilisés principalement dans le domaine aéronautique et plus récemment dans le domaine automobile. Dans ce cas, une image électronique donnant des informations sur la conduite du vol ou la navigation est surimposée au paysage extérieur au moyen d'un mélangeur optique placé dans le champ visuel du pilote. Les visuels de casque réalisent la même fonction. L'ensemble opto-électronique comprenant la génération d'images et le mélangeur sont, dans ce cas, placés dans ou sur le casque du pilote, la visière du casque pouvant servir de mélangeur optique.

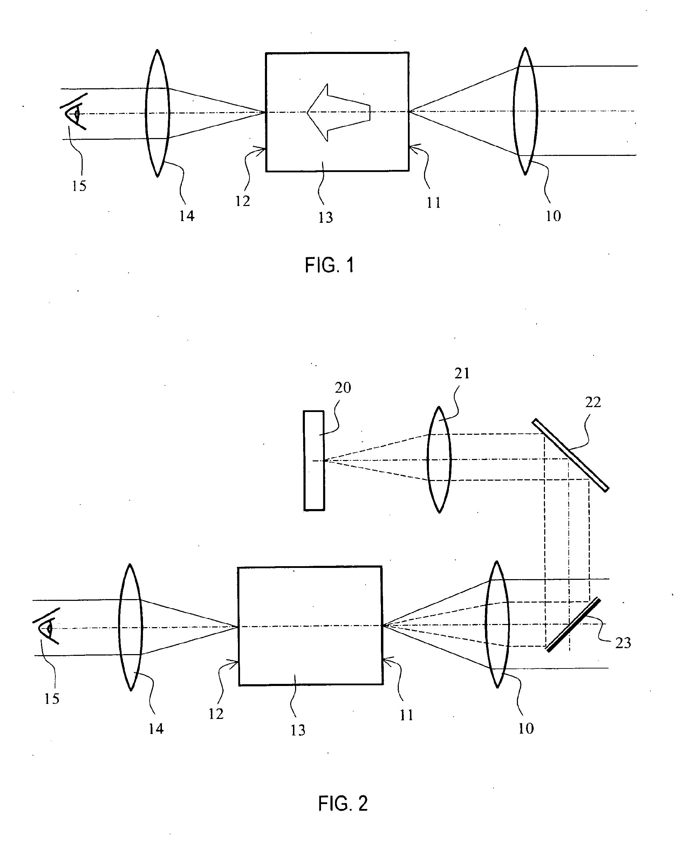

Pour effectuer des missions de nuit, les pilotes d'aéronefs disposent également de jumelles de vision nocturne. Ces dispositifs sont également connus sous les acronymes de JVN signifiant Jumelles de Vision Nocturne et de NVG signifiant Night Vision Goggles. Généralement, une JVN comporte deux corps de jumelle identiques disposés devant les yeux de l'observateur. Comme indiqué sur la figure 1, un corps de jumelles de vision de nuit comporte essentiellement 3 éléments principaux qui sont :
- Un objectif de focalisation 14 ;
- Un dispositif amplificateur 13 possédant une première surface 11 d'entrée photoémissive et une seconde surface 12 de sortie photosensible ;
- Un oculaire 14.

L'objectif 10 forme une image du paysage extérieur sur la surface d'entrée photoémissive 11. L'image optique est alors convertie en signal électrique qui est amplifié puis converti de nouveau en image optique intensifiée sur la seconde surface de sortie photosensible 12. Cette image intensifiée est observée au moyen de l'oculaire 10 par l'oeil 15 de l'observateur.

Lorsque les jumelles de vision de nuit sont utilisées pour le pilotage d'aéronefs, il est nécessaire de fournir au pilote un certain nombre d'informations sur la conduite du vol. Pour le confort du pilote et la sécurité des vols, il est souhaitable que ces informations soient superposées directement dans l'image intensifiée.

Une solution possible consiste à utiliser un dispositif optique permettant de superposer l'image électronique venant de la source d'image à l'entrée de l'objectif 10. Cette solution présente l'avantage de nécessiter une image très faiblement lumineuse dans la mesure où elle est amplifiée par l'intensificateur de la jumelle. La figure 2 illustre cette conception. Le dispositif optique de superposition d'images comprend une source d'images 20, une optique de collimation 21 et un mélangeur optique 23. Dans le cas de la figure 2, le mélangeur 23 est une simple lame séparatrice de faisceaux. Le dispositif optique peut également comprendre un ou des miroirs de repli 22. Les rayons lumineux représentés par des traits pointillés venant de la source d'images après collimation par l'optique de collimation et réflexion sur le mélangeur sont ainsi superposés aux rayons lumineux venant du paysage extérieur, représentés par des traits continus fins.

Une des difficultés de réalisation de ce type de dispositif est la réalisation du mélangeur optique. Il doit introduire une perturbation minimale sur le paysage extérieur. En particulier, la transmission optique du paysage à travers le mélangeur doit être excellente, supérieure à 90 %. Il faut également veiller à obtenir une profondeur de champ du dispositif importante. En effet, la scène extérieure peut comporter des objets distants de quelques mètres à quelques centaines de mètres.

Le brevet américain de la société Elbit de référence US 4 818 065 divulgue un premier mode de réalisation du mélangeur. Celui-ci est formé de deux prismes assemblés par une face commune inclinée, ladite face commune comportant une surface réfléchissante de petites dimensions devant celles de la pupille de l'objectif de la JVN. Par ce moyen, la perturbation introduite dans le champ de l'objectif est minimisée.

Le brevet américain de la société Honeywell de référence US 5 502 455 divulgue un second mode de réalisation du mélangeur. Dans ce cas, le mélangeur est un simple miroir place sur l'axe optique de l'objectif de la JVN. Là encore, les faibles dimensions du miroir permettent de minimiser la perturbation introduite dans le champ de l'objectif.

L'objet de l'invention est de proposer une solution optique alternative et compacte dont le mélangeur optique assure une très bonne transmission du paysage extérieur. Cette solution a un avantage important par rapport aux solutions de l'art antérieur. Il devient possible de confondre l'image pupillaire du dispositif optique avec la pupille de l'objectif. On évite ainsi tout vignettage de champ et on fournit ainsi une symbologie dans un champ visuel aussi large que celui de l'objectif.

Plus précisément, l'invention a pour objet un dispositif optique de superposition d'images destiné à être disposé devant un module optique comprenant au moins un objectif et une surface photosensible ou photoémissive disposée dans le plan focal dudit objectif, ledit dispositif comprenant au moins une source d'images et un mélangeur optique, ledit mélangeur
- étant formé de deux pièces optiques assemblées par une face commune sensiblement plane ;
- ayant la forme générale d'une lame à faces planes et parallèles, ladite face commune étant inclinée d'environ 45 degrés par rapport aux dites faces planes ;
- ayant une face d'entrée et une face opposée sensiblement perpendiculaires aux dites faces planes ;
caractérisé en ce que la face opposée a sensiblement la forme d'un dioptre sphérique réfléchissant et que la face commune comporte un traitement faiblement réfléchissant, le coefficient de réflexion de ce traitement étant inférieur à 10 % dans la bande spectrale d'utilisation de la surface photosensible.

Avantageusement, le coefficient de réflexion de ce traitement est inférieur à 1 % dans la bande spectrale d'utilisation de la surface photosensible ou photoémissive.

Avantageusement, ledit dispositif comporte une optique-relais disposée entre la source d'images et le mélangeur optique, agencée de façon à fournir une image intermédiaire de la source d'image sensiblement dans le plan focal du dioptre sphérique de la face opposée.

Avantageusement, l'optique relais comporte une pupille de faibles dimensions devant celles de l'objectif. Cette pupille peut être positionnée de façon que son image se forme, après réflexion sur le dioptre sphérique, sensiblement au voisinage de la face commune. Elle peut être également positionnée de façon que son image se forme après réflexions sur le dioptre sphérique et sur la lame commune sensiblement à l'extérieur du mélangeur, de façon que, lorsque le dispositif est disposé devant l'objectif, ladite image pupillaire se forme à l'intérieur de l'objectif.

L'invention concerne également des jumelles de vision de nuit comportant au moins un objectif, un dispositif à intensificateur de lumière et un oculaire, lesdites jumelles comportant un dispositif optique de superposition d'images tel que défini ci-dessus et disposé devant ledit objectif.

L'invention sera mieux comprise et d'autres avantages apparaîtront à la lecture de la description qui va suivre donnée à titre non limitatif et grâce aux figures annexées parmi lesquelles :
- La figure 1 représente le schéma de principe d'une jumelle à intensificateur de lumière ;
- La figure 2 représente la même jumelle que celle de la figure 1 mais dotée d'un dispositif optique de superposition d'images ;
- La figure 3 représente une première vue de principe d'un premier dispositif optique selon l'invention ;
- La figure 4 représente une seconde vue de principe du premier dispositif optique selon l'invention ;
- La figure 5 représente une troisième vue de principe d'un second dispositif optique selon l'invention, la pupille de ce second dispositif étant disposée différemment ;
- La figure 6 représente une vue en coupe des éléments optiques d'un premier dispositif selon l'invention.
- La figure 7 représente une vue en coupe des éléments optiques d'un premier dispositif selon l'invention.

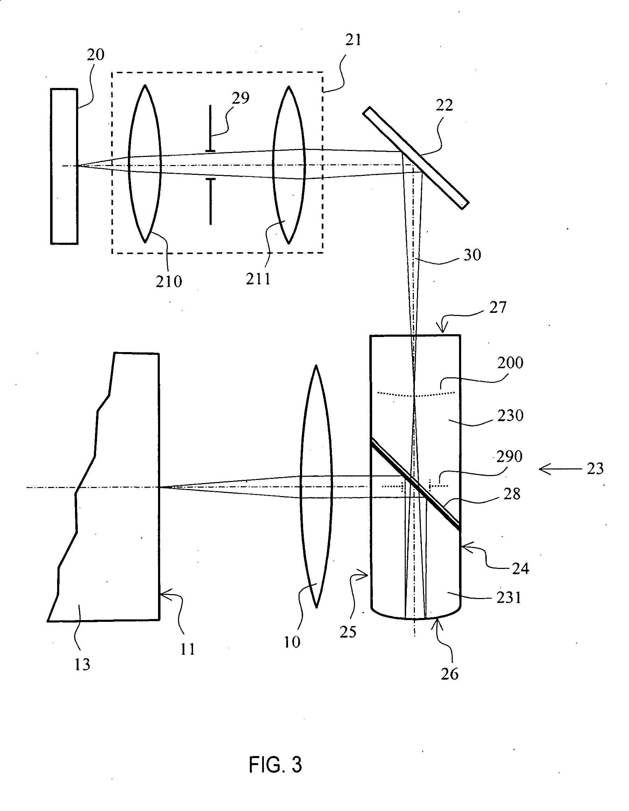

Les figures 3, 4 et 5 représentent le principe du dispositif optique de superposition d'images selon l'invention. Il comprend essentiellement :
- une source d'images 20 ;
- une optique-relais 21;
- un mélangeur optique 23.

Le dispositif optique est disposé devant un module optique comprenant au moins :
- un objectif 10 ;
- une surface photosensible ou photoémissive 11 disposée dans le plan focal dudit objectif, ladite surface appartenant, par exemple, à un dispositif amplificateur 13.

La sources d'images peut être classiquement un tube à rayons cathodiques ou encore un écran plat qui peut être :
- à cristaux liquides, connu sous l'acronyme LCD, signifiant Liquid Crystal Display.
- à diodes électroluminescentes organiques connu sous l'acronyme OLED, signifiant Organic Light-Emitting Diode.

Il est important que les caractéristiques optiques de la source d'images soient adaptées aux caractéristiques de la surface photoémissive. Ainsi, dans le cas où la surface photosensible est celle d'un dispositif à intensificateur de lumière, il est important que la source d'images vérifie les 3 points suivants :
- Résolution équivalente à celle de la surface photosensible;
- Répartition spectrale dans la plage de sensibilité spectrale de la surface photosensible ;
- Niveau de luminance émis dans la plage de luminance acceptable par la surface photosensible.

Le mélangeur optique 23 est formé de deux pièces optiques 230 et 231 de même indice optique assemblées par une face commune 28 sensiblement plane. Il a la forme générale d'une lame à faces 24 et 25 planes et parallèles.

Cette lame est disposée devant l'objectif 10, sensiblement perpendiculairement à son axe optique.

La face commune 28 est inclinée d'environ 45 degrés par rapport aux dites faces planes. La face commune 28 comporte un traitement faiblement réfléchissant, le coefficient de réflexion de ce traitement étant très inférieur à 10 % dans la bande spectrale d'utilisation de la surface photosensible 11.

Le mélangeur optique 23 comporte une face d'entrée 27 et une face opposée 26 sensiblement perpendiculaires aux dites faces planes 24 et 25. La face d'entrée 27 peut être plane ou sphérique. La face opposée 26 a sensiblement la forme d'un dioptre sphérique réfléchissant. Cette surface peut éventuellement être rendue asphérique pour améliorer la correction des aberrations géométriques optiques. Le mélangeur 23 fonctionne de la façon suivante. Les rayons lumineux venant de l'optique-relais 21 pénètrent par la face d'entrée 27, passent une première fois à travers la face commune 28 qui est semi-réfléchissante, sont collimatés par le dioptre sphérique 26 et réfléchis par la même face commune 28 semi-réfléchissante. Le rendement photométrique du mélangeur 23 ne dépasse pas quelques pour cents, mais cela n'a pas une grande importance dans la mesure où pour les applications de nuit, l'image peut être très faiblement lumineuse.

L'optique-relais 21 est disposée entre la source d'images 20 et le mélangeur optique 23. Elle comporte un ou plusieurs modules optiques 210 et 211 regroupant une ou plusieurs lentilles simples. Elle est agencée de façon à fournir une image intermédiaire 200 de la source d'image dans le plan focal du dioptre sphérique de la face opposée 26.

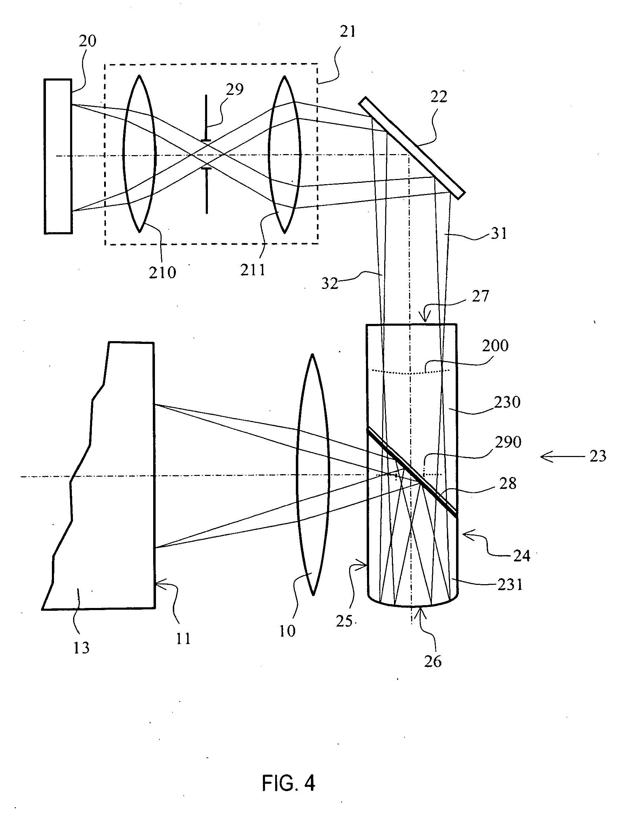

L'optique relais comporte une pupille 29 de faible dimension. Dans le premier dispositif représenté en figures 3 et 4, la pupille 29 est positionnée de façon que son image pupillaire 290 se forme, après réflexion sur le dioptre sphérique 26, sensiblement au voisinage de la face commune 28.

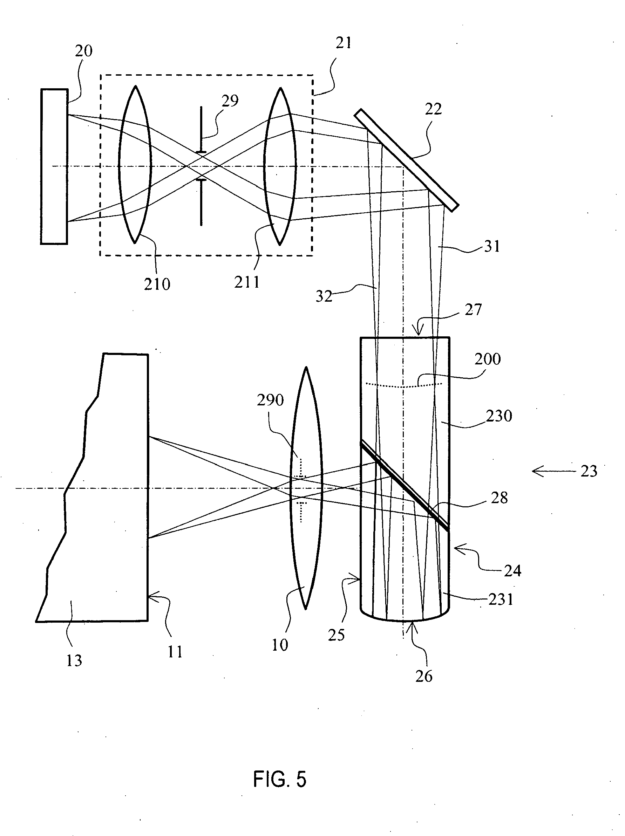

Dans le second dispositif représenté en figure 5, la pupille est positionnée de façon que son image se forme après réflexions sur le dioptre sphérique 26 et sur la lame commune 28 sensiblement à l'extérieur du mélangeur, de façon que, lorsque le dispositif est disposé devant l'objectif, ladite image pupillaire se forme à l'intérieur de l'objectif. Cette disposition est particulièrement avantageuse dans la mesure où, dans cette configuration, il peut y avoir concordance ou quasi-concordance entre cette image pupillaire et la pupille de l'objectif. On évite ainsi tout problème de vignettage du champ optique fourni par la sources d'images et dans ce cas, il devient possible de présenter une image électronique dans un champ visuel aussi grand que celui de l'objectif.

Sur les figures 3, 4 et 5, les axes optiques communs à l'optique-relais et au combineur sont figurés en tirets cadratin-points. Les tracés des rayons lumineux émis sont figurés en traits continus fins.

Par souci de clarté, sur la figure 3, les rayons lumineux issus du champ central sont uniquement représentés et sur les figures 4 et 5, les rayons lumineux issus des champs extrêmes sont uniquement représentés.

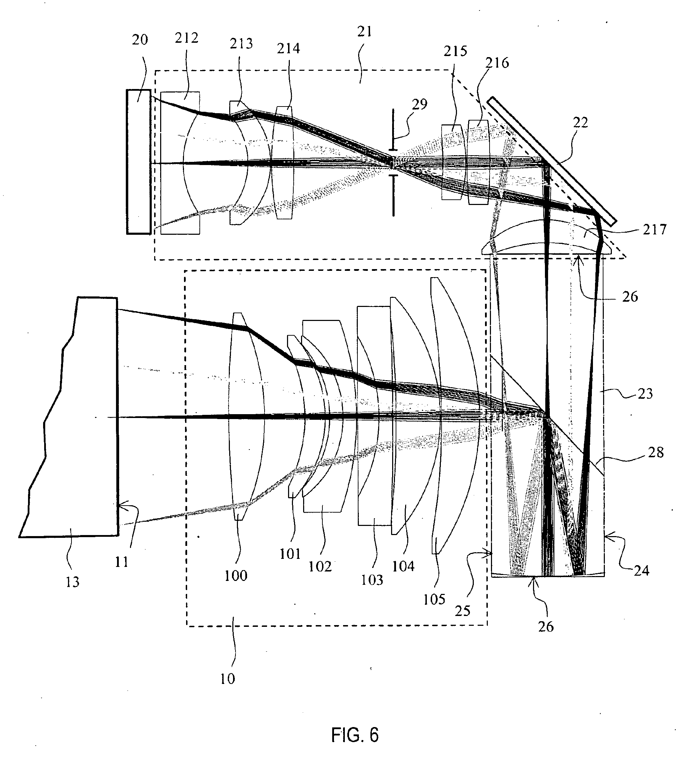

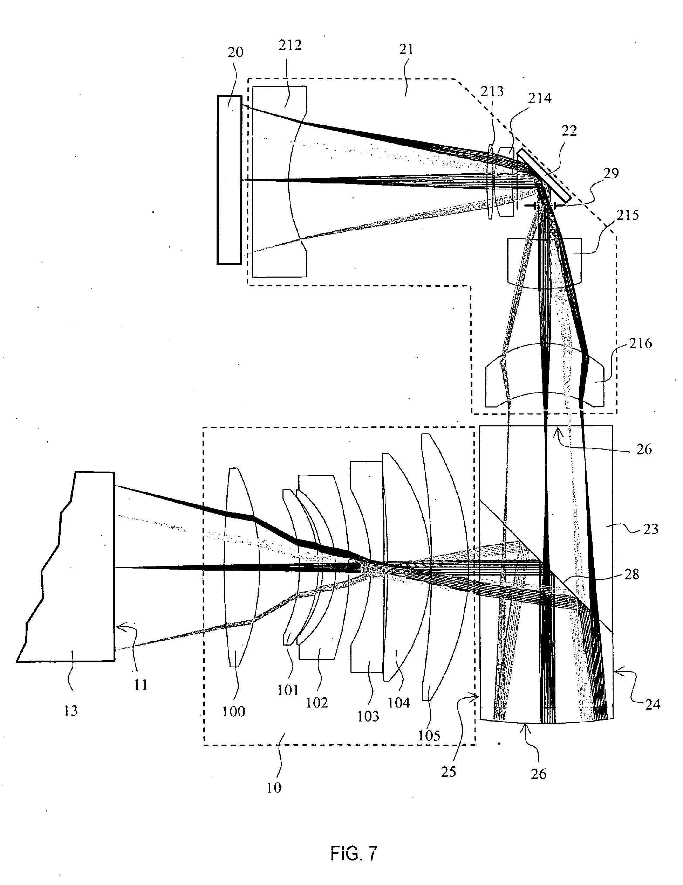

Les figures 6 et 7 représentent deux combinaisons optiques simulées comprenant à la fois un dispositif optique de superposition d'images selon l'invention et l'objectif du module optique devant lequel le mélangeur est disposé. Ces simulations ont été réalisées en utilisant le logiciel de calcul optique Code V.

Sur chaque figure, 4 faisceaux de rayons lumineux sont représentés en teintes de gris, le premier représente le champ central pris au centre de la source d'images, le second et le troisième les champs extrêmes pris en bord de source d'images, le quatrième un champ moyen. Dans le premier dispositif de la figure 6, l'image pupillaire 290 est située au voisinage de la face commune 28. Dans le second dispositif de la figure 7, l'image pupillaire 290 est située à l'intérieur de l'objectif 10.

### Caractéristiques essentielles du dispositif optique de la figure 6

La source d'image 20 a un diamètre utile de 12 millimètres.

L'optique relais a les caractéristiques suivantes :
- Combinaison optique à 6 lentilles réparties en 2 groupes de 3 lentilles notées 212 à 217 disposées de part et d'autre de la pupille 29 ;
- Grandissement image : 0.75
- Grandissement pupillaire : 1
- Longueur totale : 40 millimètres
- Diamètre : 15 millimètres
- Diamètre pupillaire : 1 millimètre

Le mélangeur optique 23 a les caractéristiques suivantes :
- Longueur totale : 30 millimètres ;
- Epaisseur : 10 millimètres
- Rayon de courbure du dioptre sphérique : 40 millimètres
- Transmission optique sur la voie paysage > 90%
- Transmission optique sur la voie source d'images < 10%

### Caractéristiques essentielles du dispositif optique de la figure 7

La source d'image 20 a un diamètre utile de 18 millimètres.

L'optique relais a les caractéristiques suivantes :
- Combinaison optique à 5 lentilles réparties en 2 groupes de 3 et de 2 lentilles notées 212 à 216 disposées de part et d'autre de la pupille 29 ;
- Grandissement image : 0.5
- Grandissement pupillaire : 1
- Longueur totale dépliée : 60 millimètres
- Diamètre : 25 millimètres
- Diamètre pupillaire : 1 millimètre

Le mélangeur optique 23 a les caractéristiques suivantes :
- Longueur totale : 30 millimètres ;
- Epaisseur : 15 millimètres
- Rayon de courbure du dioptre sphérique : 40 millimètres
- Transmission optique sur la voie paysage > 90%
- Transmission optique sur la voie source d'images < 10%

### Caractéristiques essentielles de l'objectif des figures 6 et 7

L'objectif a les caractéristiques suivantes :
- Combinaison optique à 6 lentilles notées 100 à 105 ;
- Focale : 22 millimètres
- Pupille : 20 millimètres
- Surface focale : 20 millimètres
- Longueur totale : 30 millimètres
- Diamètre : 25 millimètres

## Revendications

1. Dispositif optique de superposition d'images destiné à être disposé devant un module optique comprenant au moins un objectif (10) et une surface photosensible ou photoémissive (11) disposée dans le plan focal dudit objectif, ledit dispositif comprenant au moins une source d'images (20) et un mélangeur optique (23), ledit mélangeur
• étant formé de deux pièces optiques (230, 231) assemblées par une face commune (28) sensiblement plane ;
• ayant la forme générale d'une lame à faces planes (24, 25) et parallèles, ladite face commune étant inclinée d'environ 45 degrés par rapport aux dites faces planes ;
• ayant une face d'entrée (27) et une face opposée (26) sensiblement perpendiculaires aux dites faces planes ;
• la face opposée (26) ayant sensiblement la forme d'un dioptre sphérique réfléchissant, la face commune (28) comportant un traitement faiblement réfléchissant, le coefficient de réflexion de ce traitement étant inférieur à 10 % dans la bande spectrale d'utilisation de la surface photosensible (11),
ledit dispositif comportant une optique-relais (21) disposée entre la source d'images (20) et le mélangeur optique (23) agencée de façon à fournir une image intermédiaire (200) de la source d'image (20) dans le plan focal du dioptre sphérique de la face opposée (26), ladite optique relais (21) comportant une pupille (29) de faible dimensions devant celles de l'objectif, **caractérisé en ce que** ladite pupille est positionnée de façon que son image (290) se forme après réflexions sur le dioptre sphérique (26) et sur la lame commune (28) sensiblement à l'extérieur du mélangeur (23), de façon que, lorsque le dispositif est disposé devant l'objectif (10), ladite image pupillaire se forme à l'intérieur de l'objectif.

2. Dispositif optique selon la revendication 1, **caractérisé en ce que** le coefficient de réflexion du traitement est inférieur à 1 % dans la bande spectrale d'utilisation de la surface photosensible ou photoémissive (11).

3. Jumelle de vision de nuit comportant au moins un objectif (10), un dispositif à intensificateur de lumière (13) et un oculaire (14), **caractérisé en ce qu'**un dispositif optique de superposition d'images selon l'une des revendications précédentes est disposé devant ledit objectif.

## Claims

1. Optical device for superposing images, designed to be positioned in front of an optical module comprising at least an objective (10) and a photosensitive or photoemissive surface (11) positioned in the focal plane of said objective, said device comprising at least an image source (20) and an optical combiner (23), said combiner:
- being formed of two optical parts (230, 231) assembled via an approximately plane common face (28) ;
- having the general form of a plate with plane parallel faces (24, 25), said common face being inclined at around 45 degrees to said plane faces;
- having an entrance face (27) and a opposing face (26) that are approximately perpendicular to said plane faces;
- the opposing face (26) having approximately the form of a reflecting spherical surface, the common face (28) having a weakly reflective coating, the reflection coefficient of this coating being less than a in the spectral band used by the photosensitive surface (10),
said device comprising an optical relay (21) positioned between the image source (20) and the optical combiner (23), arranged so as to provide an intermediate image (200) of the image source (20) in the focal plane of the spherical surface of the opposing face (26), said optical replay (21) comprising an aperture (29) that is small in size compared to that of the objective, **characterized in that** said aperture is positioned in such a way that its image (290) forms, after reflection at the spherical surface (26) and at the common face (28), substantially to the outside of the combiner (23) , such that, when the device is placed in front of the objective (10), said pupil image forms inside the objective.

2. Optical device according to Claim 1, **characterized in that** the reflection coefficient of the coating is less than 1% in the spectral band used by the photosensitive or photoemissive surface (11).

3. Night vision goggles comprising at least one objective (10), one light-intensifying device (13) and one eyepiece (14), **characterized in that** an optical device for superposing images according to one of the preceding claims is placed in front of said objective.

## Patentansprüche

1. Optische Bildüberlagerungsvorrichtung, die dazu bestimmt ist, vor einem optischen Modul angeordnet zu werden, das mindestens ein Objektiv (10) und eine lichtempfindliche oder lichtemittierende Fläche (11) aufweist, die in der Brennebene des Objektivs angeordnet ist, wobei die Vorrichtung mindestens eine Bildquelle (20) und einen optischen Mischer (23) aufweist, wobei der Mischer
• aus zwei optischen Bauteilen (230, 231) geformt ist, die über eine im Wesentlichen ebene gemeinsame Seite (28) zusammengebaut werden;
• die allgemeine Form einer Lamelle mit ebenen und parallelen Seiten (24, 25) hat, wobei die gemeinsame Seite um etwa 45 Grad bezüglich der ebenen Seiten geneigt ist;
• eine Eingangsseite (27) und eine gegenüberliegende Seite (26) im Wesentlichen lotrecht zu den ebenen Seiten hat;
• die gegenüberliegende Seite (26) im Wesentlichen die Form eines reflektierenden sphärischen Diopters hat, wobei die gemeinsame Seite (28) eine geringfügig reflektierende Bearbeitung aufweist, wobei der Reflexionskoeffizient dieser Bearbeitung unter 10 % im Nutzspektralband der lichtempfindlichen Fläche (11) liegt,
wobei die vorrichtung eine Relais-Optik (21) aufweist, die zwischen der Bildquelle (20) und dem optischen Mischer angeordnet (23) und eingerichtet ist, um ein Zwischenbild (200) der Bildquelle (20) in der Brennebene des sphärischen Diopters der gegenüberliegenden Seite (26) zu liefern, wobei die Relais-Optik (21) eine Pupille (29) geringer Abmessungen gegenüber denjenigen des Objektivs aufweist, **dadurch gekennzeichnet, dass** die Pupille so positioniert ist, dass ihr Bild (290) sich nach Reflektionen auf dem sphärischen Diopter (26) und auf der gemeinsamen Seite (28) im Wesentlichen außerhalb des Mischers (23) formt, so dass, wenn die Vorrichtung vor dem Objektiv (10) angeordnet ist, das Pupillenbild sich innerhalb des Objektivs formt.

2. Optische Vorrichtung nach Anspruch 1, **dadurch gekennzeichnet, dass** der Reflexionskoeffizient der Bearbeitung unter 1 % im Nutzspektralband der lichtempfindlichen oder lichtemittierenden Fläche (11) liegt.

3. Nachtsicht-Fernglas mit mindestens einem Objektiv (10), einer lichtverstärkenden Vorrichtung (13) und einem Okular (14), **dadurch gekennzeichnet, dass** eine optische Bildüberlagerungsvorrichtung nach einem der vorhergehenden Ansprüche vor dem Objektiv angeordnet ist.
